# FASCICULE DE BREVET EUROPEEN

(11) **EP 3 762 279 B1**
(45) Date de publication et mention de la délivrance du brevet: **18.06.2025**
(21) Numéro de dépôt: 19710033.2
(22) Date de dépôt: 06.02.2019
(51) Int. Cl.: B62D 25/18, B60R 5/04, B60R 7/02

(54) **RENFORT DE PASSAGE ROUE MULTIFONCTIONS**
MULTIFUNKTIONSRADKASTENVERSTÄRKUNG
MULTIFUNCTIONAL WHEEL HOUSING REINFORCEMENT

(30) Priorité: 05.03.2018 FR 1851862
(43) Date de publication de la demande: 13.01.2021
(73) Titulaire: Stellantis Auto SAS, 78300 Poissy (FR)
(72) Inventeur: PODVIN, Christophe, 78180 MONTIGNY LE BRETONNEUX (FR); TING, Andre, 92800 PUTEAUX (FR)
(74) Mandataire: BCIP
(86) Numéro de dépôt international: PCT/FR2019/050261
(87) Numéro de publication internationale: WO 2019/170972

(56) Documents cités:
- EP-A1- 2 380 801
- DE-A1- 10 047 541
- DE-A1- 102012 023 470
- JP-A- S6 080 944
- JP-A- S61 249 850

## Description

La présente invention se situe dans le domaine des véhicules et, notamment des véhicules automobiles. L'invention s'adresse en particulier aux pièces de type renfort de passage de roue destinées à venir en renfort d'un passage de roue arrière et aux véhicules dotés de tels renforts de passage de roue.

Le passage de roue arrière interne est une tôle formant la cloison latérale agencée entre l'espace destiné à recevoir une roue arrière de véhicule et l'intérieur du véhicule, à savoir son coffre ou son habitacle. Comparés aux passages de roues avant, les passages de roue arrière doivent subir des contraintes spécifiques à leur lieu d'implantation au sein dudit véhicule. Pour améliorer les prestations du véhicule dans son comportement routier en termes de torsion de la caisse, il est connu d'utiliser des renforts de passage de roue.

A cet effet, le document US8141937 présente une structure de véhicule comprenant un renfort de passage de roue externe arrière, situé donc en dehors de la partie intérieure du véhicule. Cette solution n'est pas avantageuse, car la pièce nécessite un revêtement additionnel contre la possible apparition de la corrosion causée par l'humidité de l'air.

Pour éviter cet inconvénient, le document CN106428222 propose l'ajout d'une pièce faisant office de doublure de custode à l'intérieur du véhicule. Une telle configuration permet effectivement d'augmenter la torsion de l'environnement d'implantation du corps creux et d'éviter les risques de corrosion. Cependant, malgré l'amélioration de la torsion de la caisse dans ce lieu d'implantation, le poids du véhicule est augmenté par le rajout de la pièce. De plus, les contraintes actuelles de fabrication demandent que l'étape de ferrage soit la plus simple possible. L'ajout d'une doublure de custode tel que proposé par ce document ne permet pas une telle simplification. Une solution reste donc à trouver pour surmonter ces contraintes.

Enfin, le document EP 2 380 801 A1 divulgue un véhicule comprenant un renfort de passage de roue selon le préambule de la revendication indépendante 1.

De nos jours, il y a un effort constant pour alléger le poids total des véhicules en vue de la réduction des émissions de gaz polluants tels que le CO₂. Un des moyens d'y parvenir est de réduire l'épaisseur des pièces formant la caisse. Cependant, à cause d'une telle réduction en épaisseur des pièces situées à l'arrière de la caisse, l'ensemble est rendu plus vulnérable aux endommagements et il ne permet plus l'assemblage des pièces supplémentaires sur les pièces déjà existantes. Une solution reste donc à trouver pour améliorer la torsion de la caisse tout en étant capable de réduire l'épaisseur des pièces se trouvant vers l'arrière de ladite caisse.

L'invention a pour objectif de pallier au moins un des inconvénients de l'art antérieur en proposant un nouveau de renfort de passage de roue permettant d'améliorer les prestations en matière de torsion de caisse sans alourdir significativement ledit véhicule. L'invention a également pour objectif de proposer un renfort de passage de roue multifonctions en ce qu'il peut servir également d'interface de fixation à au moins un élément supplémentaire et/ou à au moins un dispositif.

A cet effet et selon un premier aspect, l'invention a pour objet un véhicule comprenant un renfort de passage de roue, un panneau arrière et un passage de roue arrière interne, le véhicule étant remarquable en ce que ledit renfort est agencé pour s'étendre entre ledit panneau arrière et ledit passage de roue arrière interne.

Comme on l'aura compris à la lecture de la définition qui vient d'en être donnée, l'invention propose un nouvel agencement pour un renfort de passage de roue en le disposant dans un espace inoccupé dans l'art antérieur. Le positionnement dudit renfort de passage de roue à l'intérieur du véhicule permet de le protéger de la corrosion tout en lui permettant d'améliorer les prestations du véhicule en termes de torsion de caisse.

Par ailleurs, l'emplacement dudit renfort de passage de roue permet également une meilleure extraction de l'air de l'habitacle du véhicule, car il se substitue à une chicane. En effet, il est connu de placer une pluralité des chicanes dans l'habitacle, de type déflecteurs plastiques, pour extraire l'air dudit habitacle tout en réduisant les bruits de roulement. Ainsi, selon l'invention, le renfort de passage de roue, par son positionnement, présente en outre une fonction de chicane pour le passage de l'air. Cela va dans le sens des efforts actuels d'allègement du poids du véhicule, car l'ajout du renfort de passage de roue élimine la nécessité d'installer des chicanes supplémentaires à cet endroit. Le renfort de passage de roue comprend un corps, et ledit corps forme une interface de fixation principale et présente au moins un moyen de fixation. Le panneau arrière comprend une face interne placée en regard de la face arrière du passage de roue arrière interne, ledit corps est doté à chacune de ses extrémités, selon sa direction longitudinale, d'au moins une languette de fixation pour sa fixation au panneau arrière et au passage de roue arrière interne respectivement. Le renfort de passage de roue comprend en outre une languette de fixation supplémentaire s'étendant selon un plan incliné ou vertical en direction de l'avant du véhicule au-delà du corps du renfort de passage de roue ; et ladite languette de fixation supplémentaire est fixée ou posée en appui sur une face latérale du passage de roue arrière interne.

De manière particulièrement avantageuse, le positionnement du renfort de passage de roue selon l'invention entre ledit passage de roue et ledit panneau permet de faciliter l'implantation ou la fixation d'autres éléments comme nous allons le voir en détail. Le caractère unique et multifonctions du renfort de passage de roue facilite également le procédé de ferrage lors de la production du véhicule, puisqu'il demande la fixation d'une seule pièce au lieu de plusieurs. Cette configuration est avantageuse en ce qu'elle améliore encore les prestations du véhicule au niveau de la torsion de caisse. Ladite languette supplémentaire peut être fixée au passage de roue par soudage.

De préférence, le véhicule comprenant en outre au moins un boîtier électrique, le véhicule est remarquable en ce qu'un des boîtiers électriques est fixé à l'interface de fixation principale du renfort de passage de roue. Avantageusement, l'interface de fixation principale est plane pour permettre un meilleur support du boîtier électrique. Le boîtier électrique est préférentiellement fixé à l'interface électrique par clippage ou par vissage.

De manière optionnelle, au moins un moyen de fixation de l'interface de fixation principale est un pion de clippage, et le boîtier électrique est fixé à l'interface de fixation principale par clippage.

Préférentiellement, au moins un moyen de fixation de l'interface de fixation principale est un trou pour le passage d'une vis, et le boîtier électrique est fixé à l'interface de fixation principale par vissage.

Selon un moyen de mise en œuvre de l'invention, le véhicule comprenant un coffre doté d'une garniture latérale, le véhicule est remarquable en ce que le renfort de passage de roue comprend en outre une interface de fixation supplémentaire et en ce que ladite garniture latérale de coffre est fixée sur le renfort de passage de roue au niveau de ladite interface de fixation supplémentaire. De préférence, l'interface de fixation supplémentaire s'étend depuis l'interface de fixation principale selon un plan non parallèle à celle-ci. La présence d'une interface de fixation supplémentaire pour la garniture latérale fixée engendre une meilleure qualité perçue au toucher de ladite garniture en la rigidifiant à ce niveau.

Avantageusement, ladite interface de fixation supplémentaire et ladite languette de fixation supplémentaire s'étendent depuis un même bord de l'interface de fixation principale. De préférence, elles sont agencées de manière à être écartées l'une de l'autre. Cette configuration optimise le poids présenté par le renfort de passage de roue. Elle permet également le passage de l'air entrant dans le véhicule depuis le milieu environnant et circulant au travers de l'habitacle vers la sortie d'évacuation de l'air située à l'arrière dudit véhicule.

Tous ces avantages font que la pièce multifonctions selon la présente invention permet de surmonter les contraintes « process » en ce qu'une seule pièce est nécessaire pour assurer plusieurs fonctions dans son lieu d'implantation.

Selon un mode de réalisation, le renfort de passage de roue présente au moins une nervure de rigidification. De préférence :
- au moins une nervure de rigidification est orientée selon la direction longitudinale de l'interface de fixation principale ; et/ou
- au moins une nervure de rigidification est agencée au niveau de l'interface de fixation supplémentaire.

L'invention sera bien comprise et d'autres aspects et avantages apparaîtront clairement à la lecture de la description qui suit, donnée à titre d'exemple, en référence à la planche de dessins annexée sur laquelle :
- La figure 1 est une vue montrant le renfort de passage de roue pour véhicule selon l'invention comprenant un corps formant une interface de fixation et des languettes de fixation ;
- La figure 2 est une vue du côté gauche du coffre d'un véhicule d'une structure de véhicule comprenant un renfort s'étendant entre un passage de roue et un panneau arrière ;
- La figure 3 est une vue du côté gauche de l'intérieur du coffre d'un véhicule illustrant un panneau arrière et une garniture latérale fixée au renfort de passage de roue selon l'invention.

Dans la description qui suit, le terme « comprendre » est synonyme de « inclure » et n'est pas limitatif en ce qu'il autorise la présence d'autres éléments dans la structure, le véhicule ou la pièce de renfort de passage de roue auquel il fait référence. Il est entendu que le terme « comprendre » inclut les termes « consister en ». Sur les différentes figures, les mêmes références désignent des éléments identiques ou similaires. Les termes « avant », « arrière » s'entendront par rapport à l'orientation générale du véhicule. Le terme « avant » indiquera un positionnement orienté vers le devant d'un véhicule selon la direction horizontale et le terme « arrière » indiquera un positionnement orienté vers l'arrière d'un véhicule selon la même direction.

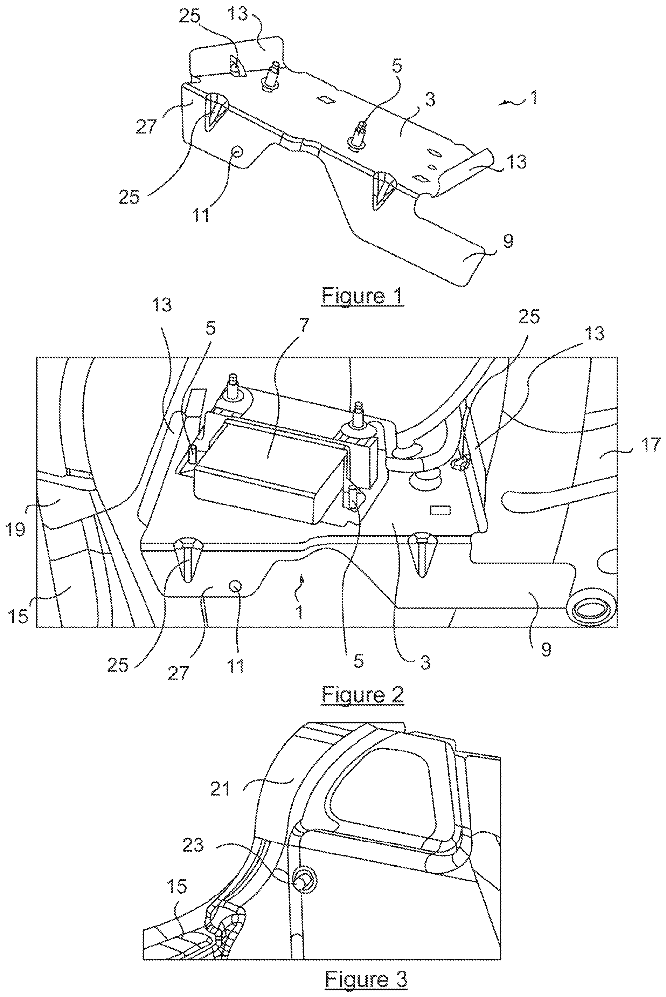

On se référera en premier lieu à la figure 1 montrant un renfort de passage de roue 1 comprenant corps formant au moins une interface de fixation 3. Ladite interface de fixation 3 comprend au moins un moyen de fixation 5, de préférence au moins deux moyens de fixation, tel que des pions de clippage ou des trous pour le passage de vis. Lesdits moyens de fixation sont destinés à la fixation d'un boîtier électrique 7.

Le renfort de passage de roue 1 comprend deux languettes de fixation 13 situées en regard l'une par rapport à l'autre et destinées à être fixées avec les pièces du milieu environnant d'implantation, à savoir le panneau arrière et le passage de roue arrière interne. Ledit renfort comprend en outre une languette supplémentaire 9 s'étendant selon la direction longitudinale et dans un plan perpendiculaire à ladite interface principale 3 et se présentant sous la forme d'un rebord de ladite interface principale 3. L'une des extrémités de la languette 9 s'étend vers l'avant au-delà de cette interface principale 3. Les languettes 9 et 13 se situent dans des plans non parallèles entre eux. De plus, le renfort comprend également une interface supplémentaire 27 se situant dans un plan perpendiculaire à l'interface de fixation 3. Celle-ci présente un moyen de fixation supplémentaire 11 configuré pour recevoir une garniture latérale 21 pourvue à son tour d'un moyen de fixation, tel qu'un pion de clippage 23 (visibles sur la figure 3). La languette supplémentaire 9 et l'interface supplémentaire 27 sont espacées. Cette configuration va dans le sens des efforts actuels d'allégement du poids des véhicules.

Le renfort de passage de roue 1 présente au moins une nervure de rigidification de la pièce. Plus le nombre de nervures est important, plus la rigidité de la pièce sera améliorée. De préférence, les nervures de rigidification sont placées autour du périmètre de l'interface de fixation 3 du renfort de passage de roue 1. Selon un mode de réalisation particulier de l'invention, le renfort de passage de roue 1 comprend au moins une nervure 25 sur chaque côté de l'interface. De préférence, le renfort de passage de roue 1 est confectionné en acier.

La figure 2 illustre l'environnement d'implantation du renfort de passage de roue 1 où un boîtier électrique 7 est fixé à l'interface de fixation 3 du renfort de passage de roue 1 au travers des moyens de fixation 5. La surface plane de l'interface principale 3 permet un bon contact entre le boîtier électrique 7 et le renfort de passage de roue 1.

La figure 2 illustre, en outre du renfort de passage de roue 1, un passage de roue arrière 17 et un panneau arrière 15. Ledit panneau arrière 15 est un panneau assemblé et comprend un logement pour un feu arrière 19. Le renfort de passage de roue 1 s'étend entre les deux pièces (15, 17), y étant fixé grâce aux languettes de fixation 13 venant prendre appui d'un côté contre le panneau arrière 15 et, de l'autre côté, contre le passage de roue 17. Les languettes de fixations 13 et la languette supplémentaire 9 sont fixées à ces deux pièces (15, 17) de manière permanente, par exemple par soudage.

Bien évidemment, le renfort de passage de roue 1 peut être implanté aussi bien du côté gauche de la caisse que du côté droit. La présence d'une languette de fixation supplémentaire 9 pouvant en outre faire office de détrompeur.

La figure 3 illustre une vue de l'intérieur du coffre d'un véhicule comprenant un panneau arrière 15 et une garniture latérale 21 fixée renfort de passage de roue (non visible sur cette figure) par un moyen de fixation 23, de préférence un pion de clippage. Ledit pion de clippage 23 est reçu par le moyen d'assemblage 11. La garniture latérale 21 vient prendre appui sur l'interface de fixation 27 du renfort de passage de roue 1 en la cachant du regard d'un utilisateur (visible sur les figures 1 et 2). Ainsi, la qualité perçue au toucher par l'utilisateur est améliorée en ce qu'elle est plus rigide. Classiquement, la garniture est fabriquée en tissu, telle qu'une moquette.

## Revendications

1. Véhicule comprenant un renfort de passage de roue (1), un panneau arrière (15) et un passage de roue arrière interne (17), ledit renfort (1) est étant agencé pour s'étendre entre ledit panneau arrière (15) et ledit passage de roue arrière interne (17), le renfort de passage de roue (1) comprenant un corps formant une interface de fixation principale (3) et présentant au moins un moyen de fixation (5), le panneau arrière (15) comprenant une face interne placée en regard de la face arrière du passage de roue arrière interne (17), ledit corps étant doté à chacune de ses extrémités, selon sa direction longitudinale, d'au moins une languette de fixation (13) pour sa fixation au panneau arrière (15) et au passage de roue arrière interne (17) respectivement, **caractérisé en ce que** le renfort de passage de roue (1) comprend en outre une languette de fixation supplémentaire (9) s'étendant selon un plan incliné ou vertical en direction de l'avant du véhicule au-delà du corps du renfort de passage de roue (1) ; et **en ce que** ladite languette de fixation supplémentaire (9) est fixée ou posée en appui sur une face latérale du passage de roue arrière interne (17).

2. Véhicule selon la revendication 1, le véhicule comprenant en outre au moins un boîtier électrique (7), le véhicule étant **caractérisé en ce qu'**un des boîtiers électriques (7) est fixé à l'interface de fixation principale (3) du renfort de passage de roue (1).

3. Véhicule selon la revendication 2, **caractérisé en ce que** :
- au moins un moyen de fixation (5) de l'interface de fixation principale (3) est un pion de clippage, et **en ce que** le boîtier électrique (7) est fixé à l'interface de fixation principale (3) par clippage ; et/ou
- au moins un moyen de fixation (5) de l'interface de fixation principale (3) est un trou pour le passage d'une vis, et le boîtier électrique (7) est fixé à l'interface de fixation principale (3) par vissage.

4. Véhicule selon l'une des revendications 1 à 3 , le véhicule comprenant un coffre doté d'une garniture latérale (21), le véhicule est **caractérisé en ce que** le renfort de passage de roue (1) comprend en outre une interface de fixation supplémentaire (27) et **en ce que** ladite garniture latérale de coffre (21) est fixée sur le renfort de passage de roue (1) au niveau de ladite interface de fixation supplémentaire (27), de préférence l'interface de fixation supplémentaire (27) s'étend depuis l'interface de fixation principale (3) selon un plan non parallèle à celle-ci.

5. Véhicule selon la revendication 4, **caractérisé en ce que** ladite interface de fixation supplémentaire (27) et ladite languette de fixation supplémentaire (9) s'étendent depuis un même bord de l'interface de fixation principale (3), de préférence elles sont agencées de manière à être écartées l'une de l'autre.

6. Véhicule selon l'une des revendications 4 ou 5, **caractérisé en ce que** le renfort de passage de roue (1) présente au moins une nervure de rigidification (25), de préférence au moins une nervure de rigidification (25) est agencée au niveau de l'interface de fixation supplémentaire (27).

7. Véhicule selon l'une des revendications 1 à 6, **caractérisé en ce que** le renfort de passage de roue (1) présente au moins une nervure de rigidification (25), au moins une nervure de rigidification (25) est orientée selon la direction longitudinale de l'interface de fixation principale (3).

## Patentansprüche

1. Fahrzeug mit einer Raddurchgangsverstärkung (1), einer Rückwand (15) und einem inneren Hinterraddurchgang (17), wobei die Verstärkung (1) so angeordnet ist, dass sie sich zwischen der Rückwand (15) und dem inneren Hinterraddurchgang (17) erstreckt, wobei die Raddurchgangsverstärkung (1) einen Körper aufweist, der eine Hauptbefestigungsschnittstelle (3) bildet und mindestens ein Befestigungsmittel (5) aufweist, wobei die Rückwand (15) eine Innenfläche aufweist, die der Rückseite des inneren Hinterraddurchgangs (17) gegenüberliegt, wobei der Körper jeweils mit einer seiner Oberfläche versehen ist Enden in Längsrichtung mindestens einer Befestigungszunge (13) zur Befestigung an der Rückwand (15) bzw. an dem inneren Hinterradkanal (17), **dadurch gekennzeichnet, dass** die Radkanalverstärkung (1) ferner eine zusätzliche Befestigungszunge (9) aufweist, die sich in einer geneigten oder vertikalen Ebene in Richtung der Vorderseite des Fahrzeugs über den Körper der Radkanalverstärkung (1) hinaus erstreckt, und dass die zusätzliche Befestigungszunge (9) an einer Seitenfläche des inneren Hinterradkanals (17) befestigt oder zur Anlage gebracht ist.

2. Fahrzeug nach Anspruch 1, wobei das Fahrzeug ferner wenigstens ein elektrisches Gehäuse (7) aufweist, wobei das Fahrzeug **dadurch gekennzeichnet ist, dass** eines der elektrischen Gehäuse (7) an der Hauptbefestigungsschnittstelle (3) der Raddurchgangsverstärkung (1) befestigt ist.

3. Fahrzeug nach Anspruch 2, **dadurch gekennzeichnet, dass**:
- Mindestens ein Befestigungsmittel (5) der Hauptbefestigungsschnittstelle (3) ist ein Klemmstift, und das elektrische Gehäuse (7) ist durch Klemmen an der Hauptbefestigungsschnittstelle (3) befestigt; und/oder
- Mindestens ein Befestigungsmittel (5) der Hauptbefestigungsschnittstelle (3) ist ein Loch für den Durchtritt einer Schraube, und das elektrische Gehäuse (7) ist an der Hauptbefestigungsschnittstelle (3) durch Verschrauben befestigt.

4. Fahrzeug nach einem der Ansprüche 1 bis 3, wobei das Fahrzeug einen Kofferraum mit einem Seitenbelag (21) aufweist, das Fahrzeug **dadurch gekennzeichnet ist, dass** der Raddurchgangsverstärker (1) ferner eine zusätzliche Befestigungsschnittstelle (27) aufweist und dass der Seitenkofferraumbelag (21) an der zusätzlichen Befestigungsschnittstelle (27) an dem Raddurchgangsverstärker (1) befestigt ist, wobei sich vorzugsweise der zusätzliche Befestigungsschnittstelle (27) von der Hauptbefestigungsschnittstelle (3) in einer Ebene erstreckt, die nicht parallel zu dieser verläuft.

5. Fahrzeug nach Anspruch 4, **dadurch gekennzeichnet, dass** die zusätzliche Befestigungsschnittstelle (27) und die zusätzliche Befestigungszunge (9) sich von einem gleichen Rand der Hauptbefestigungsschnittstelle (3) erstrecken, vorzugsweise so angeordnet sind, dass sie voneinander beabstandet sind.

6. Fahrzeug nach einem der Ansprüche 4 oder 5, **dadurch gekennzeichnet, dass** die Raddurchgangsverstärkung (1) wenigstens eine Versteifungsrippe (25) aufweist, vorzugsweise wenigstens eine Versteifungsrippe (25) an der zusätzlichen Befestigungsschnittstelle (27) angeordnet ist.

7. Fahrzeug nach einem der Ansprüche 1 bis 6, **dadurch gekennzeichnet, dass** die Raddurchgangsverstärkung (1) mindestens eine Versteifungsrippe (25) aufweist, wobei mindestens eine Versteifungsrippe (25) in Längsrichtung der Hauptbefestigungsschnittstelle (3) ausgerichtet ist.

## Claims

1. Vehicle comprising a wheel arch reinforcement (1), a rear panel (15) and an inner rear wheel arch (17), said reinforcement (1) being arranged to extend between said rear panel (15) and said inner rear wheel arch (17), the wheel arch reinforcement (1) comprising a body forming a main attachment interface (3) and having at least one attachment means (5), the rear panel (15) comprising an inner face placed facing the rear face of the inner rear wheel arch (17), said body each being provided with at its ends, along its longitudinal management, of at least one fixing tongue (13) for fixing it to the rear panel (15) and to the inner rear wheel arch (17) respectively, wherein the wheel arch reinforcement (1) further comprises an additional fixing tongue (9) extending in an inclined or vertical plane in management of the front of the vehicle beyond the body of the wheel arch reinforcement (1); and wherein said additional fixing tongue (9) is fixed or resting on a lateral face of the inner rear wheel arch (17).

2. Vehicle according to claim 1, the vehicle further comprising at least one electrical box (7), the vehicle being **characterized in that** one of the electrical boxes (7) is fixed to the main fixing interface (3) of the wheel arch reinforcement (1).

3. Vehicle according to claim 2, **characterized in that**:
- at least one means (5) for fastening the main fastening interface (3) is a clipping pin, and **in that** the electrical box (7) is fastened to the main fastening interface (3) by clipping; and/or
- at least one fastening means (5) of the main fastening interface (3) is a hole for the passage of a screw, and the electrical box (7) is fastened to the main fastening interface (3) by screwing.

4. A vehicle according to any one of claims 1 to 3, wherein the vehicle comprises a trunk provided with a side fitting (21), wherein the wheel arch reinforcement (1) further comprises an additional attachment interface (27) and wherein said trunk side fitting (21) is attached to the wheel arch reinforcement (1) on the level of said additional attachment interface (27), preferably the additional attachment interface (27) extends from the main attachment interface (3) on a drawing not parallel thereto.

5. Vehicle according to claim 4, **characterized in that** said additional fixing interface (27) and said additional fixing tongue (9) extend from the same edge of the main fixing interface (3), preferably they are arranged so as to be spaced apart from one another.

6. Vehicle according to one of claims 4 or 5, **characterized in that** the wheel arch reinforcement (1) has at least one stiffening rib (25), preferably at least one stiffening rib (25) is arranged on the level of the additional fixing interface (27).

7. Vehicle according to one of claims 1 to 6, wherein the wheel arch reinforcement (1) has at least one stiffening rib (25), at least one stiffening rib (25) is oriented along the longitudinal management of the main fixing interface (3).
